# EUROPEAN PATENT SPECIFICATION

(11) **EP 3 244 306 B1**
(45) Date of publication and mention of the grant of the patent: **28.10.2020**
(21) Application number: 17155886.9
(22) Date of filing: 13.02.2017
(51) Int. Cl.: G06F 8/51

(54) **A COMPUTER-IMPLEMENTED METHOD FOR ALLOWING MODIFICATION OF A REGION OF ORIGINAL CODE**
COMPUTERIMPLEMENTIERTES VERFAHREN ZUR ERMÖGLICHUNG DER MODIFIKATION EINER REGION EINES URSPRÜNGLICHEN CODES
PROCÉDÉ DE MODIFICATION D'UNE RÉGION DE CODE ORIGINEL MIS EN UVRE PAR ORDINATEUR

(30) Priority: 29.04.2016 GB 201607514; 29.04.2016 DE 102016207470
(43) Date of publication of application: 15.11.2017
(73) Proprietor: FUJITSU LIMITED, Kawasaki-shi Kanagawa 211-8588 (JP)
(72) Inventor: LOPEZ, Sergio Aldea, London, Greater London W13 9AS (GB)
(74) Representative: Haseltine Lake Kempner LLP

(56) References cited:
- CHUNHUA LIAO ET AL: "Effective Source-to-Source Outlining to Support Whole Program Empirical Optimization", 8 October 2009 (2009-10-08), LANGUAGES AND COMPILERS FOR PARALLEL COMPUTING, SPRINGER BERLIN HEIDELBERG, BERLIN, HEIDELBERG, PAGE(S) 308 - 322, XP019143154, ISBN: 978-3-642-13373-2 * page 309, line 12 - line 17; figures 1,2,7 * * page 312, line 6 - line 22 * * page 313, line 8 - line 11 * * page 316, line 2 - line 4 *

## Description

The present invention relates to analysis and improvement of code/software and is particularly applicable in High Performance Computing (HPC) environments.

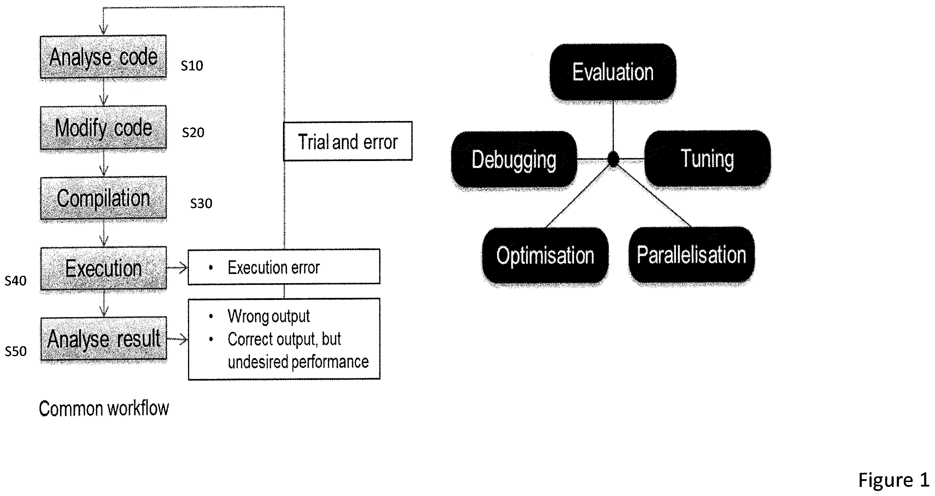

Software (computer code) analysis, such as performance evaluation, optimization, or parallelization tasks for compiled software code can involve time consuming, trial-and-error processes, and, often, is very tedious. In the worst case scenario, if the programmer has not written the source code, understanding how it works is rather complicated. Figure 1 shows the common workflow that a programmer has to follow in order to achieve the mentioned tasks. In step S10, the code is analysed by the programmer. In step S20 the code is modified, then compiled in step S30, and executed in step S40, which may give an execution error. Following compilation, the result is analysed (S50). The result may include a wrong output, or a desired output but with an undesired performance. This is a trial and error process, and a further step S10 follows step S50 until the result is satisfactory.

This type of workflow is used for evaluation, debugging, tuning, optimisation and parallelisation of compiled software.

As an example of some of these tasks, we can find that classifying variables within an OpenMP loop is not always easy due to data dependency. Moreover, choosing a scheduling policy for distributing iterations among threads, in a shared memory system, while relying on libraries, such as OpenMP, often requires executing the same code several times and collecting information beforehand and afterwards.

In order to save some time during evaluation and debugging processes, different isolation techniques have been proposed. These techniques can, for example, allow extraction of a certain piece of code from the parent application with the main goal of speeding the evaluation, debugging and tuning processes. These techniques, usually tied to checkpointing mechanisms to save the state of the program before the execution of the extracted piece of code, can allow re-run of said piece of code without executing the whole parent application (or program - the terms are used synonymously herein) from the beginning.

It is desirable to provide a technique that improves upon these extraction techniques to aid code development.

CHUNHUA LIAO ET AL: "Effective Source-to-Source Outlining to Support Whole Program Empirical Optimization", 8 October 2009, LANGUAGES AND COMPILERS FOR PARALLEL COMPUTING, SPRINGER BERLIN HEIDELBERG, BERLIN, HEIDELBERG, PAGE(S) 308-322, XP019143154, ISBN: 978-3-642-13373-2, discloses a source-to-source outliner (ROSE) for large scale C/C++, Fortran and OpenMP applications.

According to a first aspect of the invention there is provided a computer-implemented method for allowing modification of a region of original code of a computer program. The method comprises: annotating a region of original code for extraction with a compiler directive; and compiling code including the original code and the compiler directive, wherein the compiler directive causes the annotated region of the original code to be extracted, stored in a separate file, and linked to a function call at a position in the original code from which the extracted region was extracted; and wherein the compiler instruments the remaining original code to allow starting and ending working sets to be saved; further comprising performing a capture execution of the code including the original code and the extracted region to capture the starting and ending working sets for the extracted region and further comprising comparing an ending working set of the extracted region in a replay of the extracted region with the captured ending working set.

This method can thus use a compiler directive added to the program to separate a region of original code into a new file, which is separately executable once compiled.

The original extracted code, which may then be modified for instrumentation purposes, is in a non-compiled form and can remain in its original format.

The function call can allow dynamic loading of the code region into the parent application when the parent application is executing, using the function call. At that stage, the code region (including any user amendments made subsequently and any additional instrumentation) is compiled and executed (or run, which is used herein as a synonym for executed). Dynamic loading may be achieved by compiling the application with a flag, and compiling the extracted code in a similar way to the way that libraries are compiled.

Invention embodiments allow a region of code to be modified without requiring re-compilation of the parent application. Since the original code from the code region is available to the user in its original format/state; it can be understood in the form it was written and can be modified in any fashion the user wishes (although for the code region to still function properly, the input and output parameters must match the original version to the extent required for the code region to "fit" into the parent application). For example, parameters may be changed that require recompilation of the code, since the extracted code is compiled after the modification. The extracted code can then be re-executed and further modifications can take place based on the re-execution, giving an interactive mechanism.

The instrumentation of the remaining original code can allow an analysis to identify the starting and ending working sets as values (and/or states) required for the extracted region to execute and values/states generated by the extracted region.

The extracted region may have been modified during the initial compilation (for example to form an intermediate representation), in which case it can be converted back into its pre-compilation form for modification by a user and for re-compilation before execution when it is called.

The method may include executing the extracted region without executing the remaining original code, in a replay (or re-execution after the capture run mentioned above) of the extracted region (this replay will correspond to a particular invocation of the extracted region, if there is more than one invocation).

This execution, taking place after the capture run, so that the extracted region has a starting working set, can thus take place even without access to the main application. For example, a user might run the extracted region locally, without requiring access to the parent application, which could be stored at a different place, or on the cloud. Since the working set is saved for each invocation of the extracted code region, it may not be strictly necessary to execute the code region within the parent application.

Alternatively, the extracted region may be executed by calling the parent application (even if it then skips to the extracted region). Also in this example, the parent application and extracted region may be in the same location or in different locations. This can be achieved by mounting remote locations into the same logical space (for example using the NFS - Network File System - protocol).

In either case, the method may include storing and/or displaying performance metrics of the extracted region. Metrics can be any of, for example, execution time of the code, increase in speed per number of threads used and distribution of iterations among threads. They may be displayed using a GUI for example, after execution. The method may include storing and/or displaying the starting and ending working sets and performance metrics of the invocation.

The method may include displaying the code itself as it executes. For example, in a user-controlled run, the user can control the execution step by step of the extracted region and view the line being executed and/or performance metrics during execution.

Since the method has already extracted the code region, keeping it in a human-readable form, it can be later shown in a GUI. It is not important whether the code is being executed at the same time because the human-readable code and executable code are detached. The code being executed may be, for example, in bytecode format as a result of the compilation process, while the displayed code is in the same format in which the programmer edits it.

Step-by-step execution can involve a technique used for debugging in which programmers compile the code with a flag (perhaps -g) and the compiler symbol table information in the final executable. This information includes symbol names, type info for symbols and files and line numbers where the symbols come from. All this information is used by debuggers (programs) to associate instructions with particular lines in the source. This technique can be used to control the step-by-step execution.

Correspondingly, the compiler may instrument the remaining original code to return control to the user when execution reaches the extracted region. In this case the extracted region will not execute without user input.

The compiler may instrument the remaining original code to allow user options to be entered during a user controlled run of the extracted code. Any suitable user options can be provided, and user options may include modification of the code in the extracted region and/or selection of a particular stored invocation of the extracted region and/or modification of the starting working set. Alternatively, it would be possible to instead instrument the extracted code to add user options, but instrumenting the remaining original code allows simplification of the format/state of the extracted code.

Additionally or alternatively, the user options include change of an entry dataset on which the computer program executes, leading to a new capture execution of the code.

In one embodiment, the compiler instruments the remaining original code to provide a conditional function call to the extracted region at the beginning of the program (also referred to herein as the parent application). This can allow the program to jump to the extracted region for execution, skipping the preceding parts of the program.

The region for extraction may be a user-specified region. For example, the user may select (for instance using a GUI to select a code region graphically, or by typing the compiler directive into the program) a hotspot, or program part which takes up a lot of CPU time, and use a method of invention embodiments to explore that hotspot.

The method can include comparing the ending working set of the extracted region in a replay of the extracted region with an expected ending working set (from the capture run). It is important to check that the result of the extracted region is the same after any changes, as well as, for example, improving performance.

The original extraction, annotation (and possibly capture execution) may be carried out at one location (for example by a first user at a first location), and manipulation of the extracted region and replay (with a capture run first if necessary) may be carried at a second location (for example by a second user), potentially accessing the parent application remotely. Indeed, a further (second or third) user may simply apply the user options described above, also at a further location. Alternatively, any or all of these steps may be carried out at the same location, or on the cloud.

In an embodiment of a second aspect, there is provided a computer-implemented method for modifying original code, comprising the method for allowing modification of a region of original code of a computer program according to the first aspect, and further comprising: accessing an executable file comprising the extracted region of original code, extracted from original code of the computer program, wherein the extracted region of original code is linked to the function call at the position in the remaining original code from which the extracted region was extracted; instrumenting the extracted region to allow capture of performance metrics required by the user and preferably to allow step-by-step execution; compiling the extracted region; accessing the starting and ending working sets for the extracted region taken from the capture execution of code including the remaining original code and the extracted region; executing the extracted region and capturing the performance metrics; and storing and/or displaying the starting and ending working sets and/or the performance metrics and/or the (human-readable or non-compiled) code in the extracted region.

This second aspect uses the separately executable file (once compiled) and the starting and ending working sets provided as described above, which may be provided at this point, or previously, by a capture execution of the code including the original code and the extracted region to capture the starting and ending working sets for the extracted region,

Execution of the extracted region may use the function call in the remaining original code (as compiled) as a dynamic link. Hence the user in this case (potentially the second user mentioned above, or indeed the same user) may trigger execution of the program and this will lead to the extracted region being compiled (if not compiled in a previous step) and executed.

The extracted region is instrumented to capture performance metrics (and potentially to allow user-controlled step by step execution). The file may also be modified by the user.

As before, the method may include displaying and/or storing the starting and ending working sets and performance metrics of the extracted region. They may be displayed using a GUI for example, after execution. The method may include displaying the code itself as it executes (in non-compiled version). For example, in a user-controlled run, the user can control the execution step by step of the extracted region and view the line being executed and/or performance metrics during execution.

The method may further comprise executing the remaining original code until it reaches the function call, dynamically loading the extracted region and preferably then returning control to the user for execution of the extracted region.

The method may further comprise allowing user modification of the extracted region, for example by modifying the code in the extracted region and/or the invocation of the extracted region and/or the starting working set. A GUI may be provided for such modification. Replay of the extracted region is possible despite modification and without recompiling the remaining original code.

In the method according to any of the previously described variants, the extracted region may be linked to a different position in the remaining original code or to a different file containing other original code, by annotating the different position or the different file with the compiler directive. So any improvement to the extracted region made by the user can be re-employed elsewhere.

A third aspect of the invention provides a compiler for allowing modification of a region of original code. This compiler corresponds to the method embodiments of the first aspect. The compiler comprises: a parser to analyse original code, the original code including annotation of a region of the original code for extraction with a compiler directive; an analyser to identify starting and ending working sets of the extracted region and to instrument the code to allow the starting and ending working sets of the extracted region to be saved; and an extractor to cause the annotated region of the original code to be extracted, stored in a separate file, and linked to a function call which remains at a position in the original code from which the extracted region was extracted, wherein the compiler is further configured: to perform a capture execution of the code including the original code and the extracted region to capture the starting and ending working sets for the extracted region and further comprising comparing an ending working set of the extracted region in a replay of the extracted region with the captured ending working set.

A known compiler may be modified to provide the compiler of invention embodiments and may contain any further components needed for its functions. For example a parser may be updated to accept the new compiler directive and a new plugin may act as the extractor, to extract the region of code (and if there is also a generator to convert the original code to an intermediate representation, potentially to change it from the intermediate representation to the original language/version). The same plugin may also act as the analyser.

The compiler may be part of a computer system which also includes an input to allow annotation of the code, as well as execution resources (memory and processor) for the compiler, which also allow a capture run to take place.

A fourth aspect of the invention provides an apparatus for modifying original code. The apparatus corresponds to the methods of the second aspect. The apparatus comprises: a compiler according to the third aspect of the invention; an upload interface to access a file comprising the extracted region of original code, extracted from original code of the computer program, wherein the extracted region of original code is linked to the function call at the position in the original code from which the extracted region was extracted; an instrumentation module to allow instrumentation of the extracted region to allow capture of performance metrics required by the user (and preferably to allow step-by-step execution); a further compiler to compile the extracted region; an input to access starting and ending working sets for the extracted region taken from a previous invocation of the extracted region or from the capture execution of code including the original code and the extracted region; a loader to dynamically load the extracted region and allow the extracted region to be called and executed; and a user output to display the starting and ending working sets and performance metrics.

This apparatus may be provided as part of a computer system including the compiler, or as part of a separate system, and linked to the compiler computer system. A third system may allow a lower-level user to access the user options to modify the extracted regions and replay the extracted region.

Any or all of the apparatus, compiler or various systems may further comprise a user interface to allow a user to modify the code in the extracted region and/or the invocation of the extracted region and/or the starting working set.

Methods or computer programs according to invention embodiments can be described as computer-implemented in that they require processing and memory capability.

The apparatus according to preferred embodiments is described as configured or arranged to, or simply "to" carry out certain functions. This configuration or arrangement could be by use of hardware or middleware or any other suitable system. In preferred embodiments, the configuration or arrangement is by software.

There can be provided a program which, when loaded onto at least one computer configures the computer to become the system, compiler or apparatus according to any of the preceding definitions or any combination thereof.

According to a further aspect there is provided a program which when loaded onto the at least one computer configures the at least one computer to carry out the method steps according to any of the preceding method definitions or any combination thereof.

In general the computer may comprise the elements listed as being configured or arranged to provide the functions defined. For example this computer may include memory, processor, and a network interface.

The invention can be implemented in digital electronic circuitry, or in computer hardware, firmware, software, or in combinations of them. The invention can be implemented as a computer program or computer program product, i.e., a computer program tangibly embodied in a non-transitory information carrier, e.g., in a machine-readable storage device, or in a propagated signal, for execution by, or to control the operation of, one or more hardware modules. A computer program can be in the form of a stand-alone program, a computer program portion or more than one computer program and can be written in any form of programming language, including compiled or interpreted languages, and it can be deployed in any form, including as a stand-alone program or as a module, component, subroutine, or other unit suitable for use in a data processing environment. A computer program can be deployed to be executed on one module or on multiple modules at one site or distributed across multiple sites and interconnected by a communication network.

Method steps of the invention can be performed by one or more programmable processors executing a computer program to perform functions of the invention by operating on input data and generating output. Apparatus of the invention can be implemented as programmed hardware or as special purpose logic circuitry, including e.g., an FPGA (field programmable gate array) or an ASIC (application-specific integrated circuit).

Processors suitable for the execution of a computer program include, by way of example, both general and special purpose microprocessors, and any one or more processors of any kind of digital computer. Generally, a processor will receive instructions and data from a read-only memory or a random access memory or both. The essential elements of a computer are a processor for executing instructions coupled to one or more memory devices for storing instructions and data.

The invention is described in terms of particular embodiments. Other embodiments are within the scope of the following claims. For example, the steps of the invention can be performed in a different order and still achieve desirable results. Multiple test script versions can be edited and invoked as a unit without using object-oriented programming technology; for example, the elements of a script object can be organized in a structured database or a file system, and the operations described as being performed by the script object can be performed by a test control program.

Elements of the invention have been described using the terms "module" or "unit" and functional definitions. The skilled person will appreciate that such terms and their equivalents may refer to parts of the system that are spatially separate but combine to serve the function defined. Equally, the same physical parts of the system may provide two or more of the functions defined.

For example, separately defined means may be implemented using the same memory and/or processor as appropriate.

Preferred features of the present invention will now be described, purely by way of example, with references to the accompanying drawings, in which:-
Figure 1 is a flowchart of a common workflow for code analysis purposes, and a star view of various reasons for such analysis;
Figure 2a is a flow chart of a method for extracting a code region in a general embodiment of the invention;
Figure 2b is block diagram of components in a compiler which extracts a code region according to a general embodiment of the invention;
Figure 3a is a flow chart of a method for modifying a code region in a general embodiment;
Figure 3b is block diagram of components in a system which modifies a code region according to a general embodiment of the invention;
Figure 4 is a functionality overview of embodiments of the invention;
Figure 5 is a high-level flow chart of an invention embodiment;
Figure 6a is an example of a code region annotation;
Figure 6b is an example of extracted code;
Figure 6c is an example of instrumentation of remaining original code;
Figure 7 is a block diagram of compiler architecture as modified according to invention embodiments;
Figure 8 is a flow chart of the compilation process to extract the targeted code;
Figure 9 is an illustration of a user-controlled run of the extracted code;
Figure 10 is a flow chart describing the process of compiling and executing the extracted code region;
Figure 11a is a specific example of a code region annotation;
Figure 11b is a specific example of extracted code;
Figure 11c is a specific example of instrumentation of remaining original code;
Figure 12a is a view of original extracted code in the Figure 11 example and the expected output (the ending working);
Figure 12b is a view of modified extracted code in the Figure 11 example and the actual output;
Figure 12c is a view of differently modified extracted code in the Figure 11 example and the actual output;
Figure 12d is a view of correctly modified extracted code in the Figure 11 example and the actual output;
Figure 13a is a graph of loop iteration against thread ID for static scheduling;
Figure 13b is a graph of loop iteration against thread ID for dynamic scheduling;

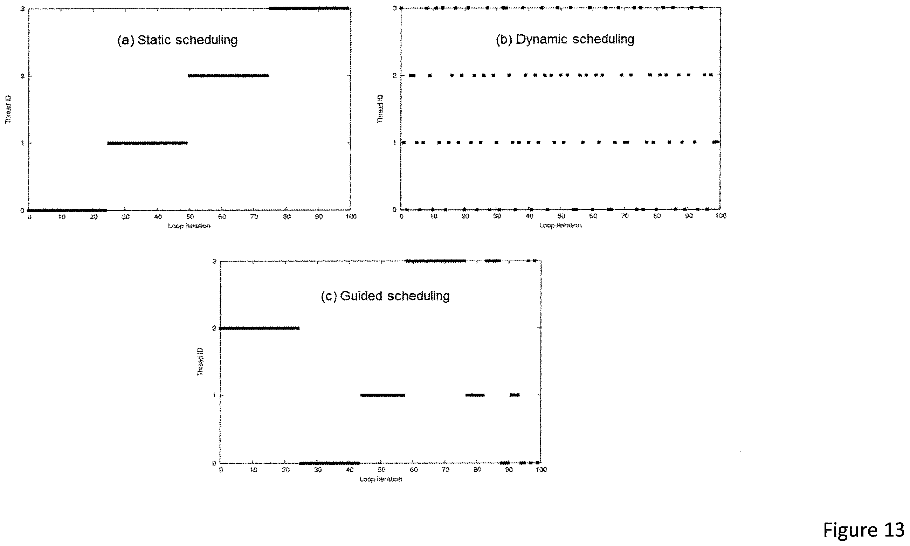

Figure 13a is a graph of loop iteration against thread ID for guided scheduling; and

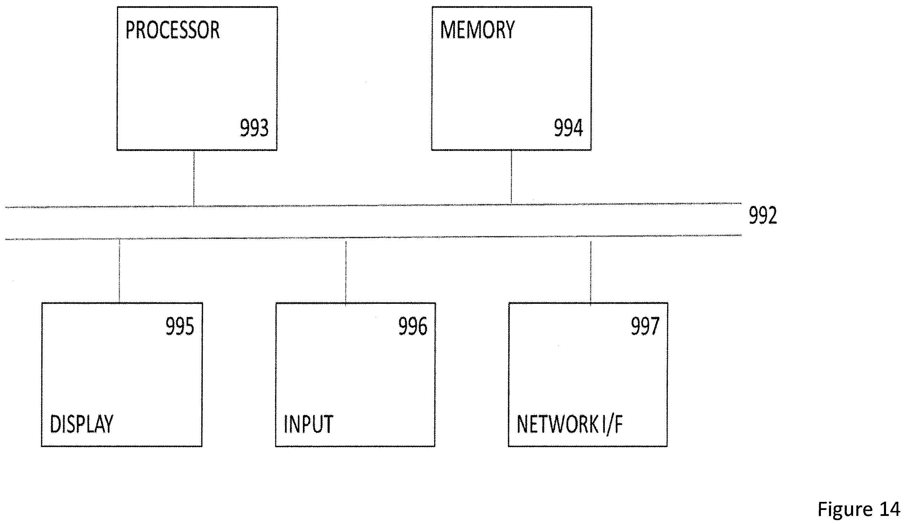

Figure 14 is a diagram of suitable hardware for implementation of invention embodiments.

Techniques have been developed to avoid the process shown in figure 1, by extraction of relevant code sections. Most of the related art approaches enable some form of modification of original extracted source code, but they do not keep this code as an independent file (which may be stored and modifiable separately from the parent application). Furthermore, the related art does not allow an interactive modification of the code and its working set, or a user-controlled execution of the code while visualising (displaying) different types of metrics that characterise both the code and its execution over the working set.

This visualisation becomes really helpful when understanding parallel pieces of code and how they actually behave. Understanding how the execution of the parallel code has been scheduled can be beneficial to tune the code and improve its performance. In this context, related art publications may allow visualizing schedules of parallel applications, but do not enable the user to modify and re-run the loop or parallel region from the beginning without having to re-compile and re-execute the whole code, because they are only focused on visualizing schedules of an already compiled and executed parallel program. This limitation has an impact on the amount of time required to replay different versions of the same piece of code. The visualisation of how the iterations of a parallel loop are scheduled is only an example. In fact, the visualisation may show intermediate values of the variables of the code region, as well as other metrics, such as cache fails.

As a way of facilitating the code insight, step-by-step execution has been proposed in the prior art. This approach can allow a step-by-step execution visualizing at the same time the task being scheduled, but only focuses on showing data regarding the scheduling part. Moreover, this prior art approach cannot modify the code representing an algorithm without needing to recompile the whole parent application.

The inventors have come to the realisation that there is no proposal in the current literature that allows the exploration (and potentially visualisation) of both an extracted piece of code and its different performance metrics, while enabling its re-execution without the need to recompile the parent application, and at the same time allowing change of different parameters of the extracted code (working set, invocation) or the code itself, perhaps with an interactive interface. Moreover, the related art does not keep the extracted code as an independent file, nor allow the possibility of easily selecting a specific region of code to be extracted, which provides a higher flexibility in terms of functionality.

In order to solve this problem, embodiments of this invention propose a system able to extract a selected piece of code from an application's (or other computer program's) source code. By using a new compiler directive, the enclosed code region is extracted in the form of a new file that can be later loaded or linked externally. This maximizes the flexibility of how the extracted code can be later applied, either to the same application or even a different one.

Other invention embodiments (which may be provided together with or separately from the above main embodiment) propose an interactive system that makes use of this extracted code, by dynamically linking it into the parent program. This allows the modification and recompilation of the code, for example by using an interactive interface while the parent program is running. Moreover, values of the variables and data structures accessed within the extracted code region (working sets) can be saved by a checkpointing mechanism, so that the code region can be re-executed without the need to restarting the whole program.

The working sets can be also interactively modified through an interface before replaying the code, providing a functionality not shown in state-of-the-art work. Furthermore, if the extracted code is invocated several times in the parent application, embodiments can also allow the selection of a certain invocation to be replayed, using its corresponding starting working set.

Once the extracted source code has been replayed, embodiments can make use of the interface to show different performance metrics regarding the executed code, as well as the state of the program after executing a particular invocation of the extracted code. This is used for both informative and verification purposes, enabling a result-driven checking of the modifications made in the extracted source code.

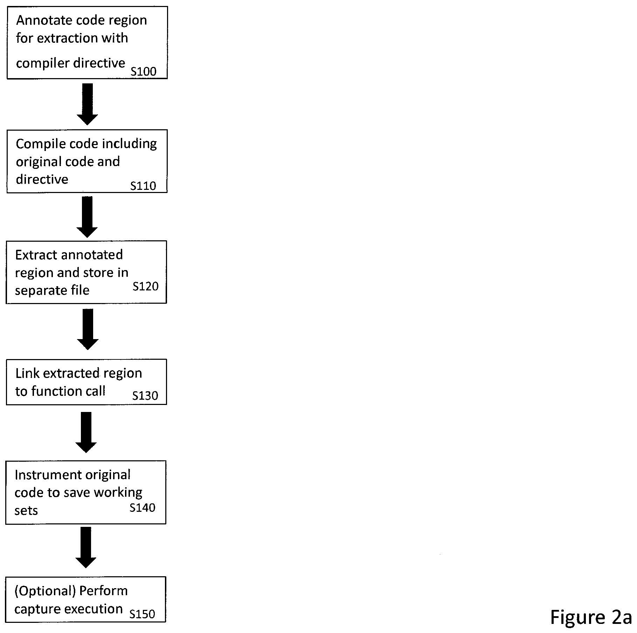

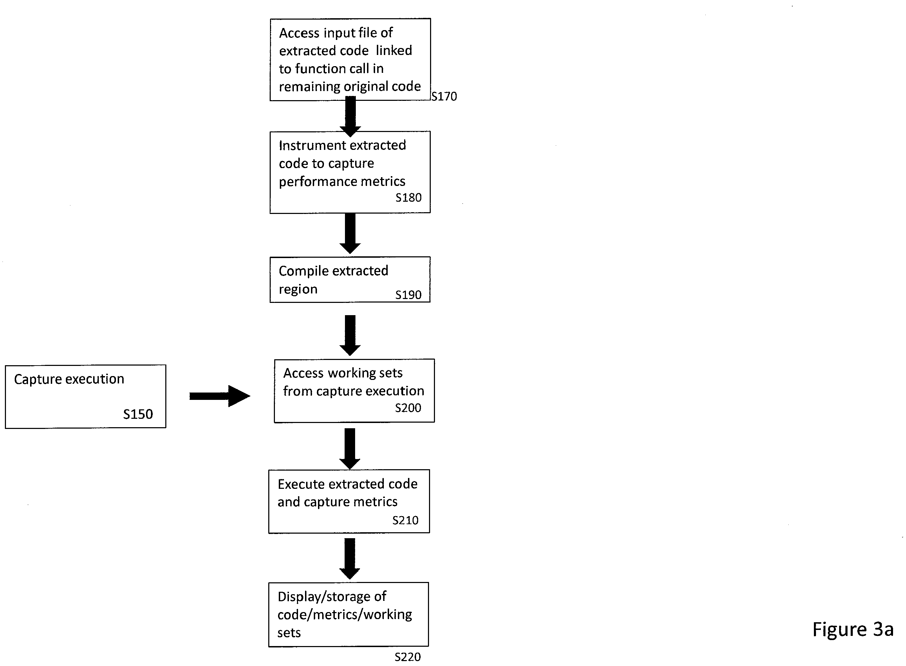

Figure 2a shows a general embodiment of the invention, in the form of a flow chart of a method for extracting a code region. In step S100 a selected code region is annotated with a compiler directive for extraction. In step S110 the code including the original code and compiler directive is compiled. In step S120, the annotated region is extracted and stored in a separate file. In step S130 a function call to the extracted region links this region back into the remaining original code. In step S140, the remaining original code is instrumented to save the working sets. In step S150 an optional capture execution is carried out so that initial working sets (before any user amendment of the extracted code) are saved. This step could also be carried out at the start of figure 3a.

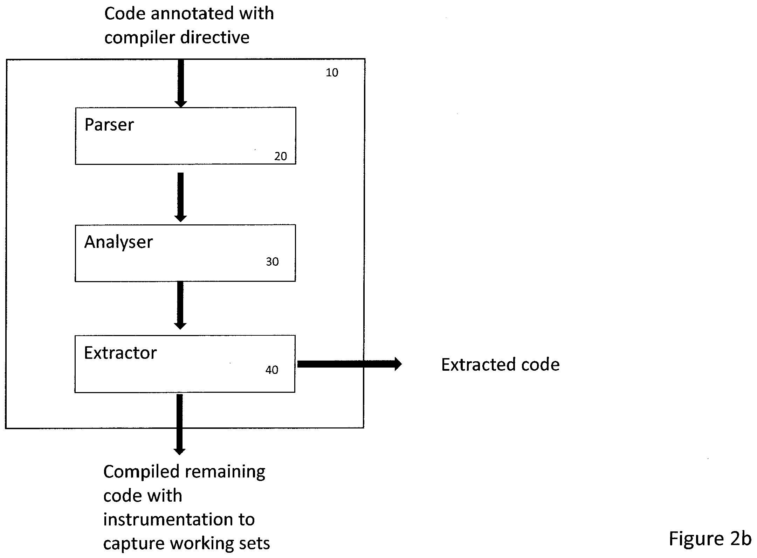

Figure 2b is a corresponding diagram of a compiler for use in this embodiment. Compiler 10 includes a parser 20 which accepts the code annotated with the compiler directive, an analyser 30 which identifies the starting and ending working sets and instruments the code accordingly to save them during execution, and an extractor 40 which extracts the selected region of code.

Figure 3a shows a general embodiment of the invention, in the form of a flow chart of a method for modifying a code region. This method can directly follow the method for extracting the code region, for example using the same system and carried out by the same person, or this method can be carried out at a later time and/or by a different user, with access only required to the file of the extracted code.

In step S170, the method accesses an input file of extracted code which is linked to a function call in remaining original code. The code is instrumented to capture performance metrics in S180. In step S190, the extracted code region is compiled. Working sets are accessed from a previous capture execution S150 in step S200. The previous capture execution may be carried out, for example, at the start of this method, before step S170. The starting working sets allow execution of the extracted code in step S210, even without the execution of the remaining original code. In step S220, there is display and/or storage of any information which might be useful. For example, the code might be displayed, and/or the working sets and/or the performance metrics.

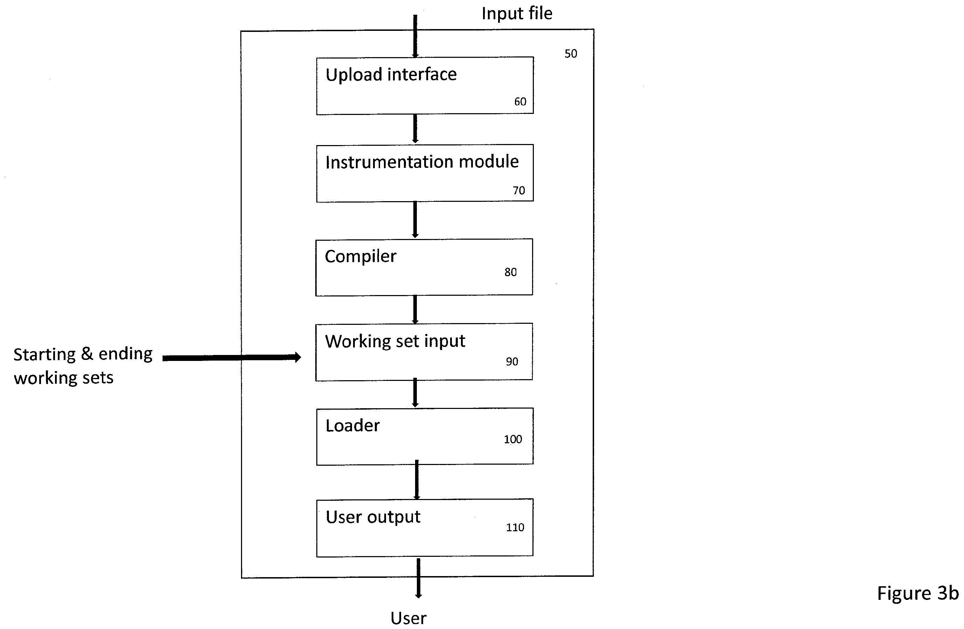

Figure 3b is a corresponding diagram of an apparatus for use in this embodiment. Compiler 50 includes an upload interface 60, and instrumentation module 70, compiler 80, an input module for the working sets 90, a loader to dynamically load the extracted code and allow execution, and a user output which provides the display of the information mentioned previously.

Incidentally, compiler 50 may be the same as compiler 10, and is quite likely to be the same basic compiler, with one difference: the additional functionality of the compiler that extracts the code is not provided. In fact, it would be possible to use a different base compiler, provided that the target architecture is the same.

Invention embodiments provide an interactive system that allows the extraction of user-selected code regions for their isolated modification and customizable re-execution without either compiling or necessarily re-executing the whole parent application.

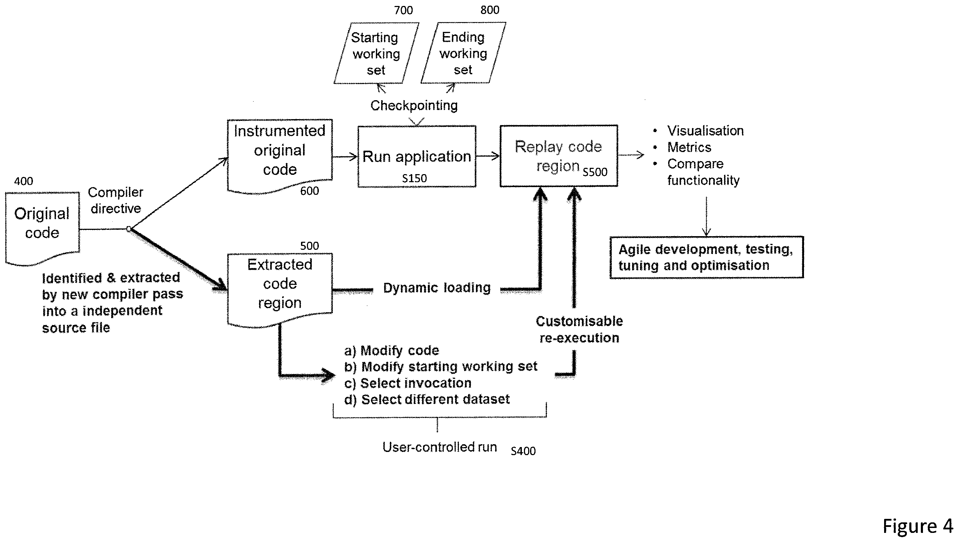

Figure 4 shows an overview of an invention embodiment from the point of view of the functionality. Novel parts are highlighted in bold. The original code 400 is divided by the compiler directive into the extracted code region 500 and the instrumented original code 600. This instrumented code is used to run the application in S150 and to use checkpointing to capture the working sets 700, and 800. This allows replay of the code region in step S500. As shown by the arrows leading to the replay box, the extracted code region 500 is dynamically loaded. In a user-controlled run there are options to:
a) modify the code;
b) modify the starting working set;
c) select the invocation; and
d) select a different dataset.
As stated in the diagram, all this provides a customisable re-execution in the replay, allowing visualisation, the provision of metrics and comparison of functionality and providing agile development, tuning and optimisation.

This system captures the state of the program before and after the execution of each invocation of the selected code region (different working sets), allowing the re-execution of each particular invocation. The state before execution can be interactively modified before re-executing the code. The state after execution is used to compare the output of a replay against the expected output, which is the result of the capture run.

This interactive system also allows the modification of the extracted source code for developing, testing and/or tuning purposes. During the re-execution of the extracted code, which can be user-controlled following a step-by-step running, performance metrics can be captured to be shown in the system interface (or GUI). Moreover, if the starting working set remains the same as the original, the system can also check whether the changes made in the extracted code alters its outcome by checking the original ending working.

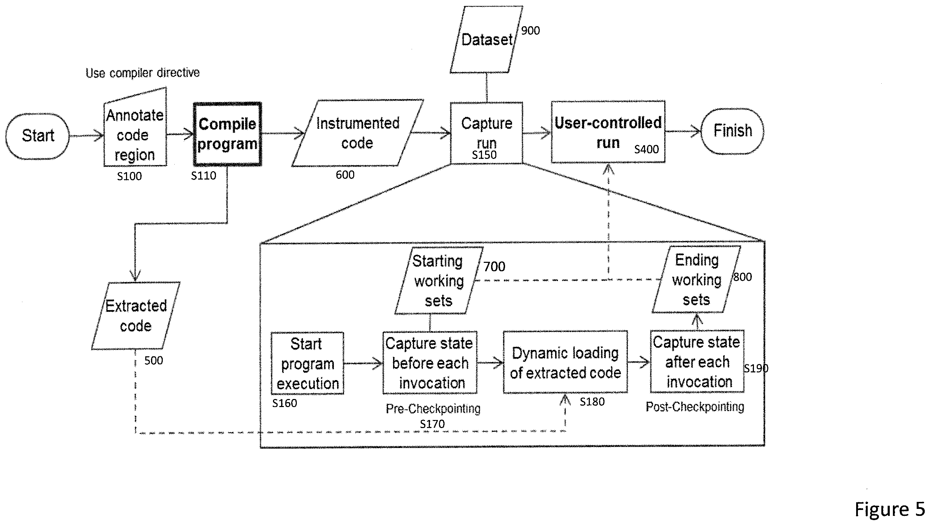

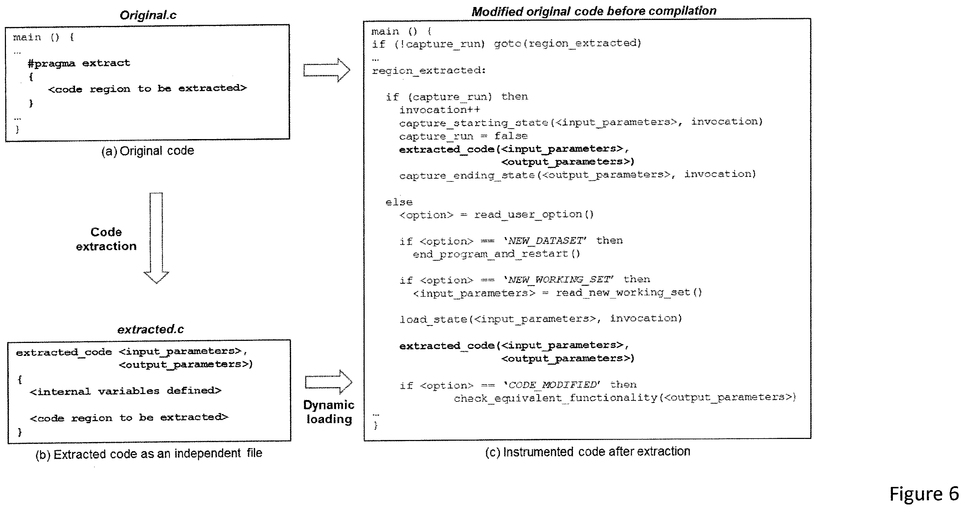

Figure 5 is a high-level flow chart of an invention embodiment. Given a particular application's source code, the user annotates a certain code region in S100 by using a new compiler directive (#pragma extract) as shown in Figure 6(a). Once the code has been annotated, the system compiles the application S110, generating an instrumented version of the code 600 that contains a function call to the extracted code region. This code region is located in an independent file that can be dynamically loaded into the parent application during its execution, as Figure 6(b) shows. This extraction process is a unique feature of invention embodiments.

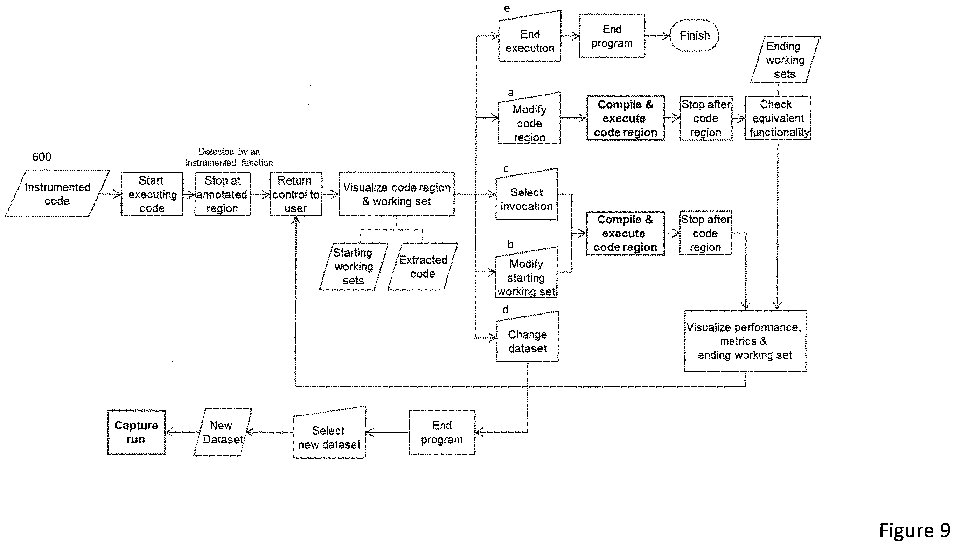

The executable generated by the compiler is then run once S150 with dataset 900 to capture the value of the different variables and data structures used within the extracted code before the code is executed, namely the state of the program before executing the extracted code. As a result, the application starts executing S160 until the extracted code is reached, as Figure 6(c) depicts. At this point, the values of the variables and data structures 700 required to execute the extracted code region are saved, building a starting working set. Then, the extracted code is dynamically loaded into the application S180, and when its execution finishes, the values of the variables and data structures that have been written within the extracted code, and hence they could be used afterwards, are also saved S190 creating an ending working set 800. Both working sets will be used during the user-controlled run S400, described in Figure 9 and explained later in this document.

Figure 6 depicts the process of code annotation (Figure 6(a)), extraction (Figure 6(b)), and corresponding instrumentation (Figure 6(c)) from the point of the view of the source code. A new compiler directive is proposed to annotate the region of code to be extracted, named #pragma extract.

The code enclosed by the proposed compiler directive is extracted and saved into a new source code file, while the original code is instrumented to implement the functionality required. Figure 6(c) describes how this instrumentation can be from the point of the source code.

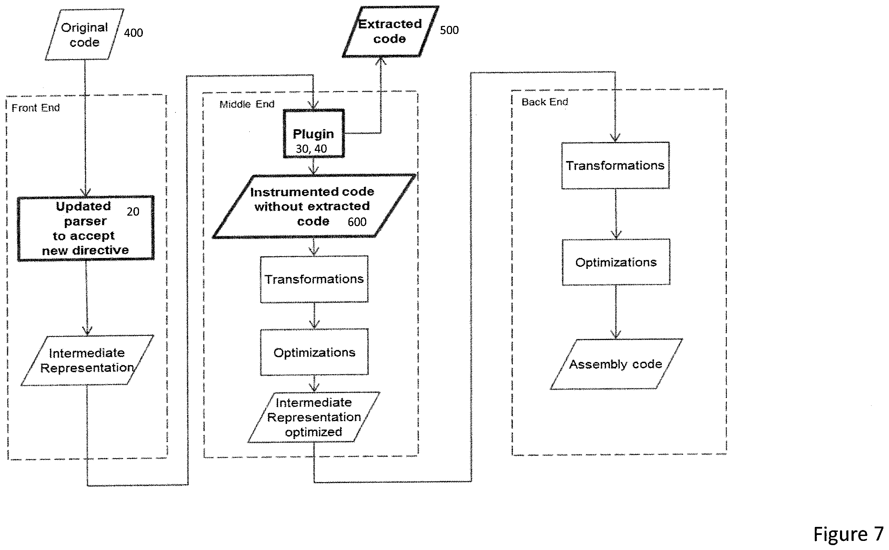

The extraction and instrumentation of the code is done at compile time. In order to achieve this, the standard compilation process, followed by compilers such as LLVM (Low Level Virtual Machine) or GCC (Gnu Compiler Collection), has to be augmented, as shown in Figure 7, which is a process flow in the front end, middle end and back end of a modified compiler to achieve the extraction of the code marked by the compiler directive and the instrumentation of the original code. The parts shown in bold are modified in invention embodiments.

First of all, the parser 20, responsible for the syntactic analysis of the code, has to be updated to recognise the proposed compiler directive. Having done this, the compiler is able to generate a first intermediate representation of the original code 400. This representation feeds into the second layer (middle end) of the compiler architecture, in which transformations and optimizations are applied to the code. Since the goal of this invention is to extract the code without any modification, a plugin 30, 40 (software module inserted into the compiler to alter its standard behaviour) is inserted before any transformation is performed. The extracted code is converted back to the original language, such as C, while the rest of the code is appropriately instrumented before the compilation process can continue. This instrumentation is automatically added by the compiler.

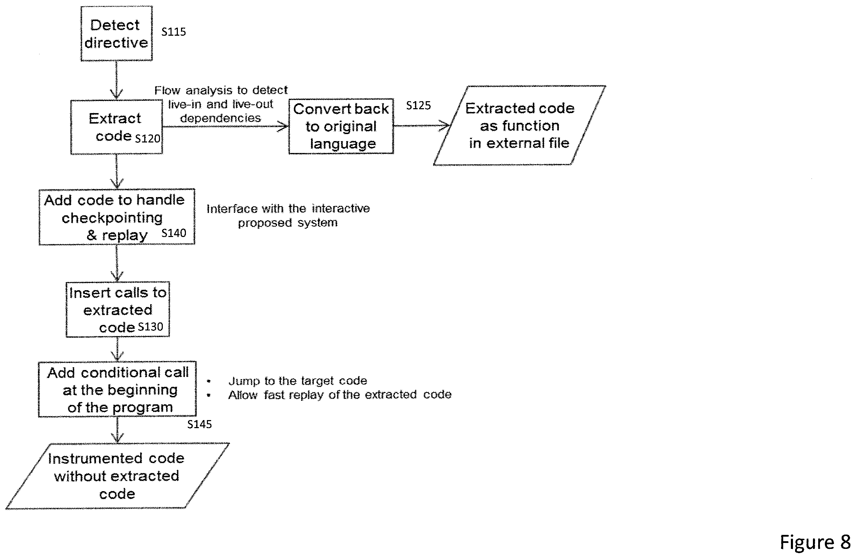

Figure 8 describes the process followed by the plugin inserted into the compiler. This process does not allow user input. When the new compiler directive is detected S115, the code enclosed by the directive is extracted S120. In order to extract this code it is necessary to apply a flow analysis to detect live-in and live-out dependencies, that is, which values are required by the extracted code to run properly, and which values are generated as a result of the code's operation. As a result of this analysis the parameters for the artificial function created to isolate the code are precisely set. Finally, as the code is held by the compiler using an intermediate representation, the extraction code is transformed back into its original language S125 and saved into an independent source file as a function.

Once the code has been extracted, the rest of the application's code is instrumented S140 to handle the saving process of the starting and ending working sets previously mentioned, and guarantee the correct replay of the extracted code, as well as implement the rest of the functionalities proposed by this invention and described in Figure 9. In particular, calls to the extracted code are inserted for each invocation, S130 and a conditional call may be inserted at the beginning of the program, S145, to skip to this section. The reader may note that steps S130 and S140 occur in reverse order from Figure 2a, and indeed these processes can take place in either order.

Figure 9 describes the mechanism proposed in one embodiment to allow the user to control the execution of the extracted code. The instrumented program 600 resulting from the compilation process starts its execution, stops at the annotated code region, and returns the control to the user, who can visualise both the extracted code region and the working set corresponding to the first invocation of said code. The pause in execution is added by the compiler during instrumentation of the remaining original code.

At this moment, the user can perform one of the following actions:
- **End the execution of the program (e):** The system ends the program and finishes its execution.
- **Modify the extracted code region (a):** The user can modify the source code of the extracted region in order to tune and optimize it. These modifications can be done via a graphical interface, or manually accessing the file containing the extracted code. Then, the modified code is compiled, dynamically linked into the program, and executed. Once the code has been executed there is a stop, and the ending working set, namely the values of the variables and data structures written within the extracted code, is compared with the previously captured ending working set in order to check if the modified code is functionally equivalent to the original extracted code. This way, the user is notified if the changes made affect the expected operation of the extracted code.
   Afterwards, the performance metrics recorded during the execution of the extracted code are presented by the system in a visual format, as well as the values corresponding to the ending working set. Finally, control is returned again to the user to start the process again.
   **Select a different invocation of the extracted code region (c):** A code region can be invocated at different times during the execution of a program. The user can select which invocation to run again by indicating a number or name that corresponds to a particular invocation, which being recorded during the 'capture run'. Then, the code is compiled, dynamically linked into the program, and executed with the correct starting working set corresponding to the invocation indicated.
   Afterwards, the performance metrics recorded during the execution of the extracted code are presented by the system in a visual format, as well as the values corresponding to the ending working set. Finally, the control is returned again to the user to start the process again.
- **Modify the starting working set being used (b):** Each invocation of the extracted code region is associated with a starting working set which the code needs to be replayed. The values of this working set can be also modified with the aim of testing different cases for the extracted code. Then, the same process as indicated in the previous option (c) is followed.
- **Change the dataset of the program (d):** The entry dataset that modifies the whole behaviour of the program can be changed. As a result, the current execution of the program, which has been initialised using a different dataset, is ended. Then, the user can set a different dataset for the program to run, while the system operation goes back to the 'capture run' state.

This user-controlled run of the extracted code with options (a) to (e) above is a unique feature of invention embodiments. Another option is to select a different compiler, or different compiler options, and this takes place in step S190, described below.

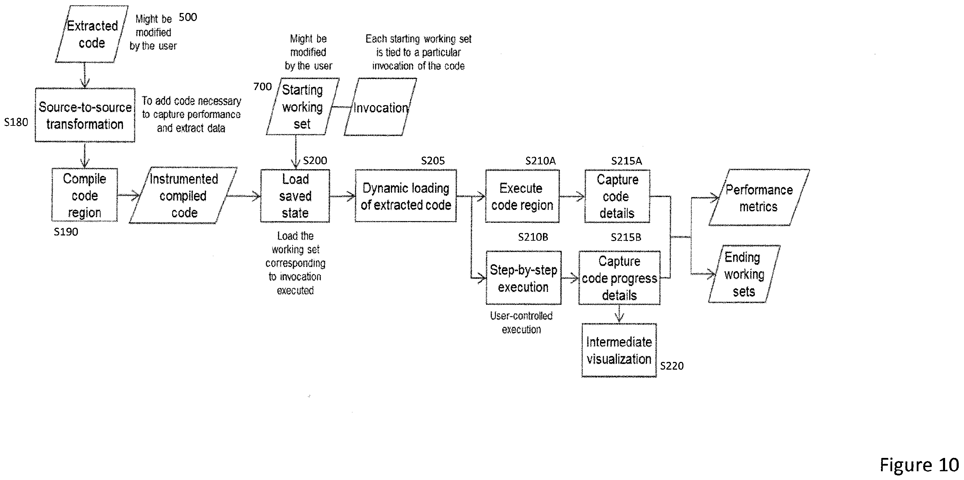

The detailed compilation and execution operation of the extracted code is described in Figure 10. Prior to the compilation, a source-to-source transformation S180 is applied to the extracted code 500, which might be also modified by the user, in order to instrument the code to capture all the performance metrics required, and allow for a step-by-step execution thereof. The term source-to-source is used to indicate that the process takes as input a first piece of source code and produces as its output another piece of source code, usually a modified version of the first. Here, this is used to instrument the code, rather than allowing instrumentation to be made directly by an ad-hoc modification of the compiler. In this way, the user has the freedom to try different compilers and different compiler optimisation.

Once the code is compiled in S190, the starting working set 700 corresponding to the selected invocation is loaded, S200, and hence, variables and data structures required by the extracted code are set to their correct values. Note that these values might be also changed by the user, being this a unique feature of invention embodiments.

After the starting working set is loaded, the extracted file is dynamically loaded in step S205 into the parent program to be then called via a function. This call starts the execution of the code region S210 shown in figure 3a, which can be uninterrupted S210A, or following a step-by-step basis, S210B. In the first case, the code performance details are captured in S215A, for example including different metrics such as execution time, cache fails, but also values at the end of the execution etc. and the whole extracted code is executed at once, while several performance metrics are collected. In the second case, the code is executed step-by-step, allowing these metrics to be collected and allowing the user to visualize the code performance details step-by-step as they evolve, S215B, for example including state of the variables S220 and the value of certain metrics along the execution of the code and also after execution.

When the extracted code ends its execution, these metrics, together with the ending working set, are gathered to be later represented, as Figure 9 shows.

### Worked Example

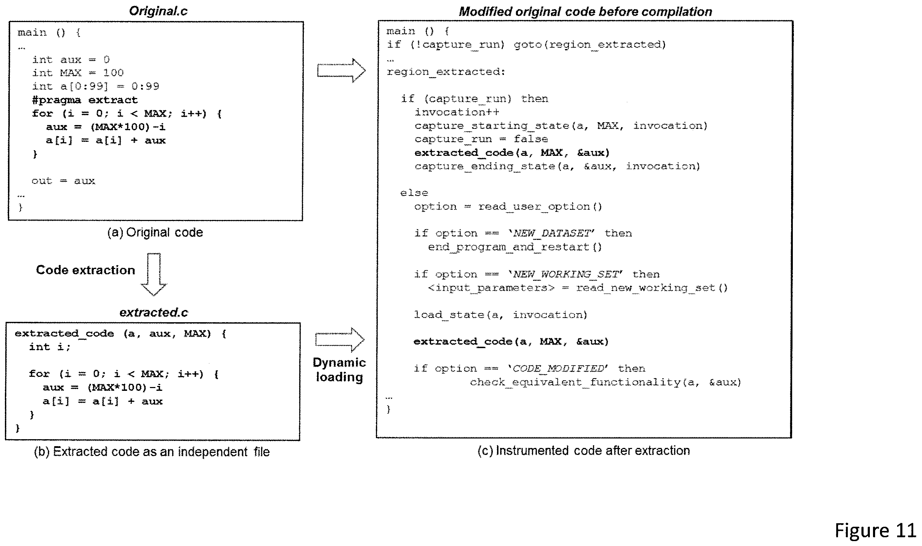

A potential user of this system has written or is using a code, part of which is included in Figure 11(a). This user has not any experience in OpenMP, but wants to apply it into the loop shown in the Figure, and learn in the process. Moreover, the whole program is significantly large, taking a few minutes to be executed, and hence, the user is not willing to spend this time after each re-compilation and re-execution of the whole program. Therefore, the user decides to makes use of an invention embodiment.

Firstly, the user annotates the loop using the compiler directive proposed (#pragma extract). Using this invention, the user compiles the program, which results in the extraction of the annotated code region, as shown in Figure 11(b), and the instrumentation of the original code, as shown in Figure 11(c). As described in Figure 6, variables that are need to run the extracted code are marked as input parameters (a, MAX), while variables that are written inside the loop that might be used outside are marked as output parameters (a, aux). These parameters are then used to set the arguments of the function that encloses the extracted code, and create the corresponding calls to the function.

Once the instrumented code has been generated, a 'capture run' is executed, in order to capture the starting and ending working sets of each invocation of the extracted code. For the particular example shown in Figure 11(a), the starting working set is a [0: 99] =0 and MAX = 100, while the ending working set is a [0: 99] = 10000 and aux = 9901.

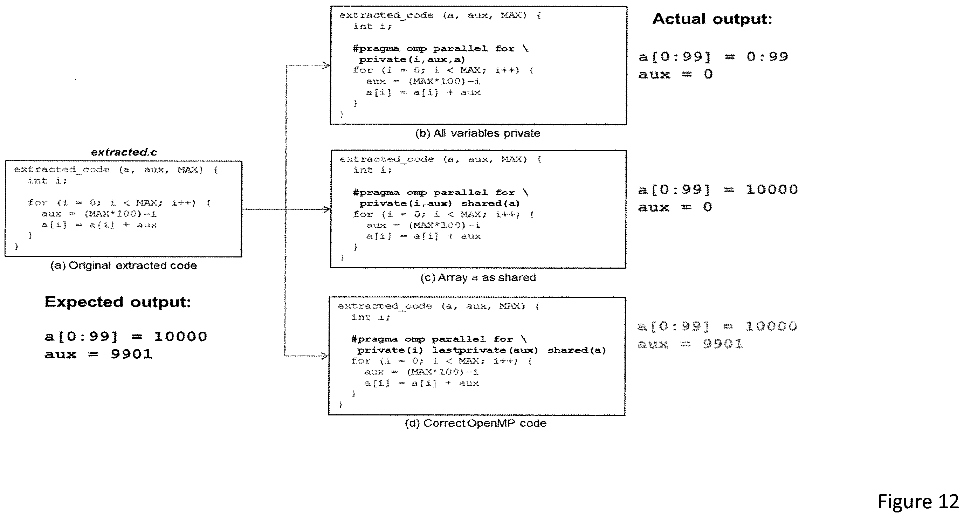

The following step is the user-controlled execution of the extracted code. Before replaying the execution of said code, the system displays the code as well as the starting working set. The system also allows the user to choose between several options. In this example, the user chooses to modify the extracted code, as shown in Figure 12. Without any experience in OpenMP, the user understands that each variable in the loop should be classified as private. After applying the changes, the extracted code is instrumented to capture some metrics. To simplify this example, the code is only instrumented to record which thread executes each loop iteration. The compiled code is then dynamically loaded into the parent program, which has already loaded the corresponding starting working set.

In this example, the extracted code is executed once. At the end of this execution, the distribution of iterations among the threads, and the values of the ending working set are shown to the user. With the modifications applied in Figure 12(b), the resulting ending working set is a[0:99] = 0:99 and aux = 0, which does not match the expected values (from the capture run). As a result, the user changes the code as shown in Figure 12(c), classifying the array a as shared, and running the code again as previously described.

The resulting ending working set is a [0: 99] = 10000, which is the expected value, while aux = 0, still wrong. Because the user is learning OpenMP in the process, the user realises that the variable aux is not classified properly, and that the correct clause for that variable is lastprivate. After applying the corresponding changes to the code, as shown in Figure 12(d), the ending working set is the expected.

Along all this process of code refining, the user could access the metric recorded during the execution of the extracted code; in this example, the distribution of iterations among the OpenMP threads. Figure 13 is a good example of visualisation of a metric, in graph form, but the reader will appreciate that other forms, such as simple numerical display, will be appropriate for other metrics. As the default OpenMP scheduling policy is static, the user could have seen a distribution of iterations as shown in Figure 13(a). Once the user has correctly classified the loop variables, he decides to play with different scheduling policies. After adding the clause schedule (dynamic), the user could see a different distribution as shown in Figure 13(b). If the user adds the clause schedule (guided), he could see the distribution shown in Figure 13(c).

Invention embodiments allow the user to play with different modifications of a piece of code, as well as visualising different features thereof, without the need of either replaying the whole parent program or dealing with the cumbersome details required to manually extract the same information as provided by the embodiments.

This invention can be applied to any field is which there is a use of source code. This invention could be used not only with HPC applications, but also with applications that belong to any other field, since the mechanism described can be applied to any type of software.

A potential application of this invention is its use on a cloud environment, offering its functionalities as a service. This way, users could access the system described by this invention remotely, without having to configure anything locally; users would only have to upload their codes to the cloud environment.

### Benefits

The implementation of invention embodiments could result in the following benefits.
- Efficiency, reducing developing and testing time, thanks to an interactive control of the re-execution of the extracted piece of code, allowing the change of the code itself, and/or its starting working set, and/or the particular invocation of the code being executed.
- Cutting the time spent in the developing of the different instances and the comparison of their outcomes, by using allowing a quick developing and execution process, avoiding the need to recompile and re-execute the whole parent program.
- Help the user not only in the development, but also for a better understanding of the code and the modifications applied. Visualisations of performance metrics, as well the values of the starting and working sets, facilitate this understanding.
- Because the extracted code is dynamically loaded in the parent application, it is possible for the user to apply changes into the code, even if the application is already running.
- Extraction of performance metrics for different configurations of the same hotspot. The user can mark to extract a hotpot in the application, and re-execute it to capture these metrics without requiring re-compiling and re-executing the rest of the parent program.

Invention embodiments may provide:
- A compiler-based extracting mechanism by which a certain piece of code enclosed within a compiler directive is extracted as an independent source code saved in a different file.
- The mechanism that allows the re-compilation of the extracted source code once the parent application is already running.
- A replay mechanism based on dynamic loading of previously extracted source code.
- An interactive user-controlled mechanism to control the execution of the extracted code, including the selection of the particular invocation being replayed.
- An interactive user-controlled mechanism to modify the extracted code, as well as its starting working set, before re-compile it.
- The mechanism by which the ending working set of the extracted code is saved and compared with the expected ending working set.
- The user-controlled mechanism by which the user is able to re-execute the extracted code step-by-step while visualising intermediate performance metrics and the state of the variables within.

Invention embodiments could be used in combination with other HPC solutions, with the aim of augmenting functionalities. The processes of testing, tuning, optimisation become more agile, potentially increasing the aggregate productivity. As an example, users could extract HPC performance metrics for different configurations of the same hotspot as they could point out a certain code region to be extracted, modified and re-executed to capture these metrics without requiring re-compiling and re-executing the rest of the parent program. As a result, the time spent in the developing of the different instances and the comparison of their outcomes would be cut.

Moreover, invention embodiments could be used by any one employee, who has to develop a new source code, or use/update existing one. Users of invention embodiments could accelerate development and testing, while gaining a better understanding of the code behaviour. For example, this could help with the OpenMP parallelization process, as well as with other technologies, such as OpenACC, or TBB.

Invention embodiments could also allow a standalone solution, as a development tool to be used for any programmer. Moreover, embodiments could be extended to be used with different profiling tools in order to increase the amount of information provided.

Figure 14 is a block diagram of a computing device, such as a data storage server which embodies the present invention, and which may be used to implement a method of an embodiment to extract and/or modify a region of code. The computing device comprises a processor 993, and memory, 994. Optionally, the computing device also includes a network interface 997 for communication with other computing devices, for example with other computing devices of invention embodiments.

For example, an embodiment may be composed of a network of such computing devices. Optionally, the computing device also includes one or more input mechanisms such as keyboard and mouse 996, and a display unit such as one or more monitors 995. The components are connectable to one another via a bus 992.

The memory 994 may include a computer readable medium, which term may refer to a single medium or multiple media (e.g., a centralized or distributed database and/or associated caches and servers) configured to carry computer-executable instructions or have data structures stored thereon. Computer-executable instructions may include, for example, instructions and data accessible by and causing a general purpose computer, special purpose computer, or special purpose processing device (e.g., one or more processors) to perform one or more functions or operations. For example the instructions may provide compiler 10 in figure 2b, or apparatus 50 of figure 3b when executed on processor 993. Thus, the term "computer-readable storage medium" may also include any medium that is capable of storing, encoding or carrying a set of instructions for execution by the machine and that cause the machine to perform any one or more of the methods of the present disclosure for modifying original code, or for allowing its modification. The term "computer-readable storage medium" may accordingly be taken to include, but not be limited to, solid-state memories, optical media and magnetic media. By way of example, and not limitation, such computer-readable media may include non-transitory computer-readable storage media, including Random Access Memory (RAM), Read-Only Memory (ROM), Electrically Erasable Programmable Read-Only Memory (EEPROM), Compact Disc Read-Only Memory (CD-ROM) or other optical disk storage, magnetic disk storage or other magnetic storage devices, flash memory devices (e.g., solid state memory devices).

The processor 993 is configured to control the computing device and execute processing operations, for example executing code stored in the memory to implement the various different functions of modules, for example the compiler, apparatus or components thereof described here and in the claims, or to carry out the methods shown in figures 2a and 3a. The memory 994 stores data being read and written by the processor 993. As referred to herein, a processor may include one or more general-purpose processing devices such as a microprocessor, central processing unit, or the like. The processor may include a complex instruction set computing (CISC) microprocessor, reduced instruction set computing (RISC) microprocessor, very long instruction word (VLIW) microprocessor, or a processor implementing other instruction sets or processors implementing a combination of instruction sets. The processor may also include one or more special-purpose processing devices such as an application specific integrated circuit (ASIC), a field programmable gate array (FPGA), a digital signal processor (DSP), network processor, or the like. In one or more embodiments, a processor is configured to execute instructions for performing the operations and steps discussed herein.

The display unit 997 may display a representation of data stored by the computing device and may also display a cursor and dialog boxes and screens enabling interaction between a user and the programs and data stored on the computing device. For example the step-by-step execution of the extracted region and/or various metrics relating to execution may be displayed. The input mechanisms 996 may enable a user to input data and instructions to the computing device to select a code region for extraction, modify an extracted code region or its starting working set, etc..

The network interface (network I/F) 997 may be connected to a network, such as the Internet, and is connectable to other such computing devices via the network. The network I/F 997 may control data input/output from/to other apparatus via the network. Other peripheral devices such as microphone, speakers, printer, power supply unit, fan, case, scanner, trackerball etc may be included in the computing device.

Methods embodying the present invention may be carried out on a computing device such as that illustrated in Figure 14. Such a computing device need not have every component illustrated in Figure 14, and may be composed of a subset of those components. A method embodying the present invention may be carried out by a single computing device in communication with one or more data storage servers via a network. The computing device may be a data storage itself storing the parent application and/or extracted region and/or working sets and results thereof, perhaps also with performance metrics.

A method embodying the present invention may be carried out by a plurality of computing devices operating in cooperation with one another. One or more of the plurality of computing devices may be a data storage server storing at least a portion of the data mentioned above.

### Definitions

**Code isolation:** is the process of separating and isolating a certain piece of source code from the rest of the application's source code. This process makes the extracted piece code independent from the original application.

**Code outlining:** is the process of extracting a certain piece of source code, wrapping it as a function, and replacing it by a call to the created function.

**Code inlining:** is the process by which a function call site is replaced with the body of the callee. This process is also called inline expansion.

**Working set:** is the value and/or state of the variables and/or data structures used by a program or piece of code to be run.

**Dynamic loading:** is a mechanism by which a computer program can, at run time, load a library (or other binary (non-text file)) into memory, retrieve the addresses of functions and variables contained in the library, execute those functions or access those variables, and unload the library from memory. Unlike other related mechanisms, such as static linking and dynamic linking, dynamic loading can allow a computer program to start up in the absence of these libraries, to discover available libraries, and to potentially gain additional functionality.

**Checkpointing:** is a technique to add fault tolerance into computing systems. It basically consists of saving a snapshot of the application's state, so that it can restart from that point in case of failure. As the application's state is saved, checkpointing can be also used to restart or replay the execution of the application from the moment in which its state was saved.

**Code invocation:** A certain piece of code can be run several times during the execution of an application. Each time a piece of code is run is called a 'code invocation'.

**Source-to-source transformation:** Process that parses a certain piece of source code to generate another piece of source of code.

**HPC:** High Performance Computing

**Profiling:** It is a form of program analysis that measures a variety of features that characterize the run-time behaviour of a software application given a particular input. Examples of these features are the elapsed time from the beginning to the end of the program execution, and the percentage of communication time in a distributed parallel program over its total elapse time.

**Profiler:** Software program that performs the profiling process.

**Instrumentation:** Process through which a program is augmented with special code instructions that monitor its runtime behaviour and/or measure its runtime performance.

## Claims

1. A computer-implemented method for allowing modification of a region of original code of a computer program, the method comprising:
annotating (S100) a region of original code for extraction with a compiler directive; and
compiling (S110) code including the original code and the compiler directive, wherein the compiler directive causes the annotated region of the original code to be extracted, stored in a separate file, and linked to a function call at a position in the original code from which the extracted region was extracted; and wherein the compiler directive instruments (S140) the remaining original code to allow starting and ending working sets to be saved;
further comprising performing a capture execution (S150) of the code including the original code and the extracted region to capture the starting and ending working sets for the extracted region and further comprising comparing an ending working set of the extracted region in a replay of the extracted region with the captured ending working set.

2. The method according to claim 1, wherein the instrumentation (S140) of the remaining original code allows an analysis to identify the starting and ending working sets as values required for the extracted region to execute and values generated by the extracted region.

3. The method according to any preceding claim, wherein the extracted region is converted back into its pre-compilation form for modification by a user and for re-compilation before execution when it is called.

4. The method according to any preceding claim, further including executing the extracted region without executing the remaining original code, in a replay of the extracted region, displaying performance metrics of the extracted region and storing the starting and ending working sets and performance metrics.

5. The method according to any preceding claim, wherein the compiler instruments the remaining original code to return control to the user when execution reaches the extracted region and/or wherein the compiler instruments the remaining original code to allow user options to be entered during a user controlled run of the extracted code.

6. The method according to claim 5, wherein the user options include modification of the code in the extracted region and/or selection of a particular stored invocation of the extracted region and/or modification of the starting working set, and/or wherein the user options include change of an entry dataset on which the computer program executes, leading to a new capture execution of the code.

7. The method according to any preceding claim, wherein the compiler instruments the remaining original code to provide a conditional function call to the extracted region at the beginning of the program.

8. The method according to any preceding claim, wherein the region for extraction is a user-specified region.

9. A computer-implemented method for modifying original code, comprising the method for allowing modification of a region of original code of a computer program according to any of the preceding claims, and further comprising:
accessing (S170) an input file comprising the extracted region of original code, extracted from original code of the computer program, wherein the extracted region of original code is linked to the function call at the position in the remaining original code from which the extracted region was extracted;
instrumenting (S180) the extracted region to allow capture of performance metrics required by the user and preferably to allow step-by-step execution;
compiling (S190) the extracted region;
accessing (S200) the starting and ending working sets for the extracted region taken from the capture execution (S150) of code including the remaining original code and the extracted region;
executing (S210) the extracted region and capturing the performance metrics; and
storing (S220) and/or displaying (S220) the starting and ending working sets and/or the performance metrics and/or the code in the extracted region.

10. The method according to claim 9, further comprising executing the remaining original code until it reaches the function call, dynamically loading the extracted region and preferably then returning control to the user for execution of the extracted region.

11. The method according to claim 9 or 10, further comprising allowing user modification of the extracted region, for example by modifying the code in the extracted region and/or the invocation of the extracted region and/or the starting working set, and replay of the extracted region without recompiling the remaining original code.

12. The method according to any preceding claim, wherein the extracted region is linked to a different position in the remaining original code or to a different file containing other original code, by annotating the different position or the different file with the compiler directive.

13. A program which when executed on a computer causes the computer to perform the method according to any preceding claim.

14. A compiler (10) for allowing modification of a region of original code, the compiler comprising:
a parser (20) to analyse original code, the original code including annotation of a region of the original code for extraction with a compiler directive;
an analyser (30) to instrument the code to allow the starting and ending working sets of an extracted region to be saved; and
an extractor (40) to cause the annotated region of the original code to be extracted, stored in a separate file, and linked to a function call which remains at a position in the original code from which the extracted region was extracted, wherein the compiler is further configured:
to perform a capture execution of the code including the original code and the extracted region to capture the starting and ending working sets for the extracted region and further comprising comparing an ending working set of the extracted region in a replay of the extracted region with the captured ending working set.

15. An apparatus (50) for modifying original code, the apparatus comprising:
a compiler (10) according to claim 14;
an upload interface (60) to access an input file comprising the extracted region of original code, extracted from original code of the computer program, wherein the extracted region of original code is linked to the function call at the position in the original code from which the extracted region was extracted;
an instrumentation module (70) to allow instrumentation of the extracted region to allow capture of performance metrics required by the user and preferably to allow step-by-step execution;
a further compiler (80) to compile the extracted region;
an input (90) to access the starting and ending working sets for the extracted region taken from a previous invocation of the extracted region or from the capture execution of code including the original code and the extracted region;
a loader (100) to dynamically load the extracted region and allow the extracted region to be called and executed; and
a user output (110) to display the starting and ending working sets and performance metrics.

16. A compiler or an apparatus according to claim 15 and/or 16, the compiler or apparatus further comprising a user interface to allow a user to modify the code in the extracted region and/or the invocation of the extracted region and/or the starting working set.

## Patentansprüche

1. Computerimplementiertes Verfahren zur Ermöglichung der Modifikation einer Region eines ursprünglichen Codes eines Computerprogramms, das Verfahren umfassend:
Annotieren (S100) einer Region eines ursprünglichen Codes zur Extraktion mit einer Compiler-Anweisung; und
Kompilieren (S110) von Code, der den ursprünglichen Code und die Compiler-Anweisung enthält, wobei die Compiler-Anweisung bewirkt, dass die annotierte Region des ursprünglichen Codes extrahiert, in einer separaten Datei gespeichert und mit einem Funktionsaufruf an einer Position im ursprünglichen Code verknüpft wird, aus der die extrahierte Region extrahiert wurde; und wobei die Compiler-Anweisung den restlichen ursprünglichen Code zum Ermöglichen instrumentiert (S140), dass beginnende und endende Arbeitssätze gespeichert werden;
ferner umfassend Ausführen einer Erfassungsausführung (S150) des Codes, der den ursprünglichen Code und die extrahierte Region enthält, zum Erfassen der beginnenden und endenden Arbeitssätze für die extrahierte Region, und ferner umfassend Vergleichen eines endenden Arbeitssatzes der extrahierten Region in einer Wiedergabe der extrahierten Region mit dem erfassten endenden Arbeitssatz.

2. Verfahren nach Anspruch 1, wobei die Instrumentierung (S140) des restlichen ursprünglichen Codes eine Analyse zum Identifizieren der beginnenden und endenden Arbeitssätze als Werte, die für die extrahierte Region zum Ausführen erforderlich sind, und Werte, die durch die extrahierte Region erzeugt werden, ermöglicht.

3. Verfahren nach einem der vorhergehenden Ansprüche, wobei die extrahierte Region zurück in ihre vorkompilierte Form zur Modifikation durch einen Benutzer und zur Rekompilierung vor Ausführung, wenn sie aufgerufen wird, umgewandelt wird.

4. Verfahren nach einem der vorhergehenden Ansprüche, ferner enthaltend Ausführen der extrahierten Region ohne Ausführen des restlichen ursprünglichen Codes, in einer Wiedergabe der extrahierten Region, Anzeigen von Leistungskennzahlen der extrahierten Region und Speichern der beginnenden und endenden Arbeitssätze und Leistungskennzahlen.

5. Verfahren nach einem der vorhergehenden Ansprüche, wobei der Compiler den restlichen ursprünglichen Code zur Rückgabe der Steuerung an den Benutzer instrumentiert, wenn die Ausführung die extrahierte Region erreicht, und/oder wobei der Compiler den restlichen ursprünglichen Code zum Ermöglichen instrumentiert, dass Benutzeroptionen während eines benutzergesteuerten Laufs des extrahierten Codes eingegeben werden.

6. Verfahren nach Anspruch 5, wobei die Benutzeroptionen Modifikation des Codes in der extrahierten Region und/oder Auswahl eines bestimmten gespeicherten Aufrufs der extrahierten Region und/oder Modifikation des beginnenden Arbeitssatzes enthalten, und/oder wobei die Benutzeroptionen Änderung eines Eingabedatensatzes, auf dem der Computer läuft, enthält, was zu einer neuen Erfassungsausführung des Codes führt.

7. Verfahren nach einem der vorhergehenden Ansprüche, wobei der Compiler den restlichen ursprünglichen Code zum Zuführen eines bedingten Funktionsaufrufs zur extrahierten Region am Anfang des Programms instrumentiert.

8. Verfahren nach einem der vorhergehenden Ansprüche, wobei die Region zur Extraktion eine benutzerspezifizierte Region ist.

9. Computerimplementiertes Verfahren zur Modifikation von ursprünglichem Code, umfassend das Verfahren zur Ermöglichung der Modifikation einer Region eines ursprünglichen Codes eines Computerprogramms nach einem der vorhergehenden Ansprüche, und ferner umfassend:
Zugreifen (S170) auf eine Eingabedatei, die die extrahierte Region eines ursprünglichen Codes, welche aus ursprünglichem Code des Computerprogramms extrahiert wurde, umfasst, wobei die extrahierte Region eines ursprünglichen Codes mit dem Funktionsaufruf an der Position im ursprünglichen Code verknüpft wird, aus der die extrahierte Region extrahiert wurde;
Instrumentieren (S180) der extrahierten Region zum Ermöglichen der Erfassung von Leistungskennzahlen, die durch den Benutzer erfordert werden, und vorzugsweise zum Ermöglichen von schrittweiser Ausführung;
Kompilieren (S190) der extrahierten Region;
Zugreifen (S200) auf die beginnenden und endenden Arbeitssätze für die extrahierte Region, die aus der Erfassungsausführung (S150) von Code entnommen werden, der den restlichen ursprünglichen Code und die extrahierte Region enthält;
Ausführen (S210) der extrahierten Region und Erfassen der Leistungskennzahlen; und
Speichern (S220) und/oder Anzeigen (S220) der beginnenden und endenden Arbeitssätze und/oder der Leistungskennzahlen und/oder des Codes in der extrahierten Region.

10. Verfahren nach Anspruch 9, ferner umfassend Ausführen des restlichen ursprünglichen Codes, bis er den Funktionsaufruf erreicht, dynamisches Laden der extrahierten Region und vorzugsweise dann Zurückgeben der Steuerung an den Benutzer zur Ausführung der extrahierten Region.

11. Verfahren nach Anspruch 9 oder 10, ferner umfassend Ermöglichen von Benutzermodifikation der extrahierten Region, beispielsweise durch Modifizieren des Codes in der extrahierten Region und/oder des Aufrufs der extrahierten Region und/oder des beginnenden Arbeitssatzes, und Wiedergabe der extrahierten Region ohne Rekompilieren des restlichen ursprünglichen Codes.

12. Verfahren nach einem der vorhergehenden Ansprüche, wobei die extrahierte Region mit einer anderen Position im restlichen ursprünglichen Code oder mit einer anderen Datei, die anderen ursprünglichen Code enthält, verknüpft wird, durch Annotieren der anderen Position oder der anderen Datei mit der Compiler-Anweisung.

13. Programm, das, wenn es auf einem Computer ausgeführt wird, bewirkt, dass der Computer das Verfahren nach einem der vorhergehenden Ansprüche ausführt.

14. Compiler (10) zur Ermöglichung der Modifikation einer Region eines ursprünglichen Codes, der Compiler umfassend:
einen Parser (20) zum Analysieren eines ursprünglichen Codes, wobei der ursprüngliche Code eine Annotation einer Region des ursprünglichen Codes zur Extraktion mit einer Compiler-Anweisung enthält;
einen Analysator (30) zum Instrumentieren des Codes zum Ermöglichen, dass die beginnenden und endenden Arbeitssätze einer extrahierten Region gespeichert werden; und
einen Extraktor (40) zum Bewirken, dass die annotierte Region des ursprünglichen Codes extrahiert, in einer separaten Datei gespeichert und mit einem Funktionsaufruf verknüpft wird, der an einer Position im ursprünglichen Code verbleibt, aus dem die extrahierte Region extrahiert wurde, wobei der Compiler ferner konfiguriert ist zum:
Ausführen einer Erfassungsausführung des Codes, der den ursprünglichen Code und die extrahierte Region enthält, zum Erfassen der beginnenden und endenden Arbeitssätze für die extrahierte Region, und ferner umfassend Vergleichen eines endenden Arbeitssatzes der extrahierten Region in einer Wiedergabe der extrahierten Region mit dem erfassten endenden Arbeitssatz.

15. Vorrichtung (50) zur Modifikation von ursprünglichem Code, umfassend:
einen Compiler (10) nach Anspruch 14;
eine Hochladeschnittstelle (60) zum Zugreifen auf eine Eingabedatei, die die extrahierte Region eines ursprünglichen Codes, welche aus ursprünglichem Code des Computerprogramms extrahiert wurde, umfasst, wobei die extrahierte Region eines ursprünglichen Codes mit dem Funktionsaufruf an der Position im ursprünglichen Code verknüpft wird, aus der die extrahierte Region extrahiert wurde;
ein Instrumentierungsmodul (70) zum Ermöglichen von Instrumentierung der extrahierten Region zum Ermöglichen der Erfassung von Leistungskennzahlen, die durch den Benutzer erfordert werden, und vorzugsweise zum Ermöglichen von schrittweiser Ausführung;
einen weiteren Compiler (80) zum Kompilieren der extrahierten Region;
eine Eingabe (90) zum Zugreifen auf die beginnenden und endenden Arbeitssätze für die extrahierte Region, die aus einem vorherigen Aufruf der extrahierten Region oder aus der Erfassungsausführung von Code entnommen werden, der den ursprünglichen Code und die extrahierte Region enthält;
einen Lader (110) zum dynamischen Laden der extrahierten Region und zum Ermöglichen, dass die extrahierte Region aufgerufen und ausgeführt wird; und
eine Benutzerausgabe (110) zum Anzeigen der beginnenden und endenden Arbeitssätze und der Leistungskennzahlen.

16. Compiler oder Vorrichtung nach Anspruch 15 und/oder 16, wobei der Compiler oder die Vorrichtung ferner eine Benutzeroberfläche umfasst, um es einem Benutzer zu ermöglichen, den Code in der extrahierten Region und/oder den Aufruf der extrahierten Region und/oder den beginnenden Arbeitssatz zu modifizieren.

## Revendications

1. Procédé, mis en œuvre par ordinateur, destiné à permettre la modification d'une région de code originel d'un programme informatique, le procédé comprenant :
l'annotation (S100) d'une région de code originel pour l'extraction avec une directive de compilateur ; et
la compilation (S110) du code incluant le code originel et la directive de compilateur, dans lequel la directive de compilateur conduit la région annotée du code originel à être extraite, stockée dans un fichier séparé et reliée à un appel de fonction dans une position au sein du code originel à partir duquel la région extraite a été extraite ; et dans lequel la directive de compilateur instrumente (S140) le code originel restant pour permettre la sauvegarde d'ensembles actifs de début et de fin ;
comprenant également la réalisation d'une exécution de capture (S150) du code incluant le code originel et la région extraite pour capturer les ensembles actifs de début et de fin pour la région extraite, et comprenant également la comparaison d'un ensemble actif de fin de la région extraite dans une reproduction de la région extraite avec l'ensemble actif de fin capturé.

2. Procédé selon la revendication 1, dans lequel l'instrumentation (S140) du code originel restant permet une analyse pour identifier les ensembles actifs de début et de fin en tant que valeurs requises pour l'exécution de la région extraite et en tant que valeurs générées par la région extraite.

3. Procédé selon l'une quelconque des revendications précédentes, dans lequel la région extraite est reconvertie dans sa forme pré-compilation pour une modification par un utilisateur et pour une recompilation avant exécution au moment de son appel.

4. Procédé selon l'une quelconque des revendications précédentes, comprenant également l'exécution de la région extraite sans exécution du code originel restant, dans une reproduction de la région extraite, l'affichage d'indicateurs de performances de la région extraite et le stockage des ensembles actifs de début et de fin et des indicateurs de performances.

5. Procédé selon l'une quelconque des revendications précédentes, dans lequel le compilateur instrumente le code originel restant pour qu'il renvoie la commande à l'utilisateur quand l'exécution atteint la région extraite et/ou dans lequel le compilateur instrumente le code originel restant pour qu'il permette l'entrée d'options utilisateur pendant un déroulement, commandé par l'utilisateur, du code extrait.

6. Procédé selon la revendication 5, dans lequel les options de l'utilisateur incluent la modification du code dans la région extraite et/ou la sélection d'une invocation stockée particulière de la région extraite et/ou la modification de l'ensemble actif de début, et/ou dans lequel les options de l'utilisateur incluent un changement d'un ensemble de données d'entrée sur lequel s'exécute le programme informatique, ce qui conduit à une nouvelle exécution de capture du code.

7. Procédé selon l'une quelconque des revendications précédentes, dans lequel le compilateur instrumente le code originel restant pour qu'il fournisse un appel de fonction conditionnel à la région extraite au début de programme.

8. Procédé selon l'une quelconque des revendications précédentes, dans lequel la région pour l'extraction est une région spécifiée par l'utilisateur.

9. Procédé, mis en œuvre par ordinateur, de modification d'un code originel, comprenant le procédé de modification d'une région de code originel d'un programme informatique selon l'une quelconque des revendications précédentes, et comprenant également :
l'accession (S170) à un fichier d'entrée comprenant la région extraite du code originel, extraite à partir du code originel du programme informatique, dans lequel la région extraite du code originel est reliée à l'appel de fonction dans la position au sein du code originel à partir duquel la région extraite a été extraite ;
l'instrumentation (S180) de la région extraite pour permettre la capture d'indicateurs de performances requis par l'utilisateur et de préférence pour permettre une exécution pas à pas ;
la compilation (S190) de la région extraite ;
l'accession (S200) aux ensembles actifs de début et de fin pour le région extraite pris à partir de l'exécution de capture (S150) du code incluant le code originel restant et la région extraite ;
l'exécution (S210) de la région extraite et la capture des indicateurs de performances ; et
le stockage (S220) et/ou l'affichage (S220) des ensembles actifs de début et de fin et/ou des indicateurs de performances et/ou du code dans la région extraite.

10. Procédé selon la revendication 9, comprenant également l'exécution du code originel restant jusqu'à ce qu'il atteigne l'appel de fonction, le chargement dynamique de la région extraite et puis préférablement le renvoi de la commande à l'utilisateur pour l'exécution de la région extraite.

11. Procédé selon la revendication 9 ou 10, comprenant également l'autorisation de la modification par l'utilisateur de la région extraite, par exemple par la modification du code dans la région extraite et/ou de l'invocation de la région extraite et/ou de l'ensemble actif de début, et la reproduction de la région extraite sans recompilation du code originel restant.

12. Procédé selon l'une quelconque des revendications précédentes, dans lequel la région extraite est reliée à une position différente au sein du code originel restant ou à un fichier différent contenant un autre code originel, par l'annotation de la position différente ou du fichier différent avec la directive de compilateur.

13. Programme qui, quand il est exécuté sur un ordinateur, conduit l'ordinateur à effectuer le procédé selon l'une quelconque des revendications précédentes.

14. Compilateur (10) destiné à permettre la modification d'une région de code originel, le compilateur comprenant :
un programme d'analyse (20) pour analyser le code originel, le code originel incluant l'annotation d'une région du code originel pour l'extraction avec une directive de compilateur ;
un analyseur (30) pour instrumenter le code pour qu'il permette de sauvegarder les ensembles actifs de début et de fin d'une région extraite ; et
un extracteur (40) destiné à conduire la région annotée du code originel à être extraite, stockée dans un fichier séparé et reliée à un appel de fonction qui demeure dans une position au sein du code originel à partir duquel la région extraite a été extraite, dans lequel le compilateur est également configuré :
pour effectuer une exécution de capture du code incluant le code originel et la région extraite pour capturer les ensembles actifs de début et de fin pour la région extraite, et comprenant également la comparaison d'un ensemble actif de fin de la région extraite dans une reproduction de la région extraite avec l'ensemble actif de fin capturé.

15. Appareil (50) pour modifier un code originel, l'appareil comprenant :
un compilateur (10) selon la revendication 14 ;
une interface de téléchargement (60) pour accéder à un fichier d'entrée comprenant la région extraite du code originel, extraite du code originel du programme informatique, dans lequel la région extraite du code originel est reliée à l'appel de fonction dans la position au sein du code originel à partir duquel la région extraite a été extraite ;
un module d'instrumentation (70) pour permettre l'instrumentation de la région extraite pour permettre la capture d'indicateurs de performances requis par l'utilisateur et préférablement pour permettre une exécution pas à pas ;
un autre compilateur (80) pour compiler la région extraite ;
une entrée (90) pour accéder aux ensembles actifs de début et de fin pour la région extraite pris à partir d'une invocation antérieure de la région extraite ou à partir de l'exécution de capture du code incluant le code originel et la région extraite ;
un chargeur (100) pour charger dynamiquement la région extraite et permettre à la région extraite d'être appelée et exécutée ; et
une sortie utilisateur (110) pour afficher les ensembles actifs de début et de fin et les indicateurs de performances ;

16. Compilateur ou appareil selon la revendication 15 et/ou 16, le compilateur ou l'appareil comprenant également une interface utilisateur pour permettre à un utilisateur de modifier le code dans la région extraite et/ou l'invocation de la région extraite et/ou l'ensemble actif de début.
